# EUROPEAN PATENT APPLICATION

(11) **EP 1 402 949 A1**
(43) Date of publication of application: **31.03.2004**
(21) Application number: 02256807.5
(22) Date of filing: 30.09.2002
(51) Int. Cl.: B01J 31/02, B01J 31/18, C07F 11/00, C07F 13/00, C07F 15/00, C07F 15/02, C07F 15/04, C07F 15/06

(54) **Metal complexes containing bis(iminophosphorane) ligands, process for their preparation and process for the oligomerisation of olefins in the presence of these complexes**

(71) Applicant: Solvay Polyolefins Europe-Belgium (Société Anonyme), 1050 Bruxelles (BE)
(72) Inventor: Beaufort, Laurence, 4550 Nandrin (BE); Jan, Dominique, 4052 Beaufays (BE); Benvenuti, Federica, 1000 Bruxelles (BE); Noels, Alfred, 4030 Liège (BE)
(74) Representative: Smith, Julian Philip Howard

(57) **Abstract**

The invention relates to metallic complexes represented by the general formula (I): 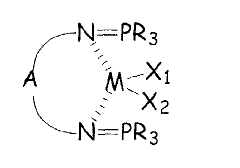 wherein:
- A is a covalent hydrocarbon bridging unit;
- M is a metal belonging to group 6 to 10 of the Periodic Table;
- each R is a optionally substituted hydrocarbon group optionally containing an heteroatom;
- X₁ and X₂ each independently are an hydrogen atom, a halogen atom, an hydrocarbon group containing from 1 to 35 carbon atoms, an alkoxy group, an amino group, a phosphorus-containing hydrocarbon group, a silicon-containing hydrocarbon group containing from 1 to 20 carbon atoms,

with the proviso that, when M is nickel, the hydrocarbon group R is not an unsubstituted phenyl radical.

It also relates to a process for the preparation of these complexes and to a process for the oligomerization of olefins in the presence of these complexes.

## Description

The present invention relates to new metallic complexes containing bis(iminophosphorane) ligands. It also relates to a process for the preparation of these complexes. Finally, it relates to a process for the oligomerization of olefins in the presence of these complexes.

In the well-known manufacture of polymers based on ethylene, the use of a comonomer such as butene, hexene or octene, which is copolymerized in minor amounts together with ethylene is not infrequent. These comonomers are often supplied as such to the polymerization units, but it happens that they are not available in some instances and for relatively long durations. In order to cope with this problem, the manufacturers then proceed with the in-situ oligomerization of the ethylene, which generates the desired amount of the above-mentioned comonomers. This in-situ oligomerization of ethylene is generally carried out in the presence of a catalyst.

Some recent catalysts developped at this aim are metallic complexes derived from metals belonging to Groups 8 to 10 of the Peridic Table of the Elements, more specifically from iron, cobalt and nickel. Hence, Britovsek et al. have described the oligomerization of ethylene by bis(imino)pyridyl iron and -cobalt complexes (Chem. Eur. J. 2000, 6, n° 12, pages 2221-2231). Sauthier et al. have disclosed the oligomerization of ethylene by NiCl₂ (1,2-diiminophosphorane) complexes wherein the organic substituent of the iminophosphorane moiety linked to the phosphor is a phenyl radical (New J. Chem, 2002, 26, pages 630-635).

New complexes derived from metals belonging to Groups 6 to 10 of the Peridic Table have now been found. and they constitute the main object of the invention. Another object of the invention resides in a process for the preparation of these organometallic complexes. It has further been discovered that these organometallic complexes are able to catalyse the oligomerization of ethylene, and this constitutes still another object of the invention.

In its main aspect, the invention thus relates to metallic complexes represented by the general formula (I) 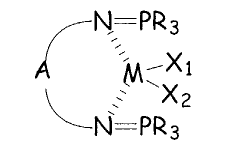 wherein :
- A is a covalent hydrocarbon bridging unit;
- M is a metal belonging to groups 6 to 10 of the Periodic Table;
- each R is a optionally substituted hydrocarbon group optionally containing an heteroatom ;
- X₁ and X₂ each independently are an hydrogen atom, a halogen atom, an hydrocarbon group containing from 1 to 35 carbon atoms, an alkoxy group, an amino group, a phosphor-containing hydrocarbon group, a silicon-containing hydrocarbon group containing from 1 to 20 carbon atoms,
with the proviso that, when M is nickel, the hydrocarbon group R is not an unsubstituted phenyl radical.

Among these metallic complexes, preferred species are those where:
- A is selected among bivalent acyclic hydrocarbon radicals, bivalent monocyclic radicals and bivalent polycyclic radicals; more preferably, A is selected among alkenylene radicals, arylalkylene radicals, and arylalkenylene radicals. Especially preferred are the complexes wherein A is a radical selected among ortho-phenylene, 4,5-dimethy-1,2-phenylene, benzylene, α,α'-naphtylene, cis-trans-1,2-cyclohexyle;
- M is a metal selected from nickel, iron, cobalt, chromium and palladium, more preferably nickel, cobalt and chromium. Nickel is especially preferred as metal M;
- each R is a radical selected among optionally substituted monovalent aliphatic and aromatic radicals; more preferably, each R is selected among cycloalkyl radicals and aryl radicals optionally substituted by alkyl groups or halogen atoms. Especially preferred R radicals are substituted phenyl, cyclohexyl, cyclopentyl, ortho-tolyl and para-tolyl.
- X₁ and X₂ are a halogen atom, more preferably a bromine or chlorine atom.

Examples of metallic complexes according to the invention are:
[*ortho*-phenylenebis(tricyclopentyl)iminophosphorane]NiBr₂;
[*ortho*-phenylenebis(tricyclopentyl)iminophosphorane]CoCl₂;
[*ortho*-phenylenebis(tricyclopentyl)iminophosphorane]CrCl₂;
[*ortho*-phenylenebis(tricyclohexyl)iminophosphorane] NiBr₂;
[*ortho-*phenylenebis(triphenyl)iminophosphorane]CoCl₂;
[ortho-phenylenebis[tris(*o*-tolyl)]iminophosphorane] NiBr₂;
[*ortho*-phenylenebis[tris(*m*-tolyl)]iminophosphorane] NiBr₂;
[*ortho*-phenylenebis[tris(*p*-tolyl)]iminophosphorane] NiBr₂;
[*ortho*-phenylenebis(trisbenzyl)iminophosphorane] NiBr₂;
[*ortho*-phenylenebis(cyclohexyldiphenyl)iminophosphorane] NiBr₂;
[*ortho*-phenylenebis[tris(*p*-chlorophenyl)]iminophosphorane] NiBr₂;
[ortho-phenylenebis[tris(2,4,6-trimethylphenyl)]iminophosphorane] NiBr₂;
[*cis*, *trans-*1,2-cyclohexylbis(triscyclopentyl)iminophosphorane] NiBr₂;
[3,4-dimethyl-1,2-phenylenebis(triscyclopentyl)iminophosphorane] NiBr₂;
[1,2-cyclohexylbis(triscyclopentyl)iminophosphorane] NiBr₂;
[1,2-cyclohexylbis(triscyclopentyl)iminophosphorane] CoCl₂;
[2-methylene-1-phenylbis(triscyclopentyl)iminophosphorane] NiBr₂;
[2-methylene-1-phenylbis(triphenyl)iminophosphorane] NiBr₂;
[2-methylene-1-phenylbis[tri(m-tolyl)]iminophosphorane] NiBr₂;
[2-methylene-1-phenylbis[tri(p-tolyl)]iminophosphorane] NiBr₂;
[2-methylene-1-phenylbis[diphenyl(cyclohexyl)]iminophosphorane] NiBr₂;
[2-methylene-1-phenylbis(tribenzyl)iminophosphorane] NiBr₂.

The following metallic complexes are especially preferred:
[*ortho*-phenylenebis(tricyclopentyl)iminophosphorane]NiBr₂;
[*ortho*-phenylenebis(tricyclohexyl)iminophosphorane] NiBr₂;
[*ortho*-phenylenebis[tris(*o*-tolyl)]iminophosphorane] NiBr₂;
[*ortho*-phenylenebis[tris(2,4,6-trimethylphenyl)]iminophosphorane] NiBr₂;
[*cis*,*trans-*1,2-cyclohexylbis(triscyclopentyl)iminophosphorane] NiBr₂.

Another embodiment of the invention relates to a process for the preparation of the metallic complexes defined above. This process comprises the following successive steps :
(1) reaction of a phosphine of general formula PR₃ where R has the same meaning as above with a halogen in order to obtain a phosphonium halide;
(2) reacting said phosphonium halide with a diamine in order to obtain a bis(aminophosphonium) compound;
(3) reacting said bis(aminophosphonium) compound with a base in order to obtain a bis(iminophosphorane) ligand;
(4) reacting said bis(iminophosphorane) ligand with a salt of the metal M as defined above.

Preferred embodiments for this process comprise:
- the use of bromine as halogen in step (1) thereof;
- the use of ortho-phenylenediamine; 4,5-dimethy-1,2-phenylenediamine; cis-trans-1,2-cyclohexylediamine; benzylenediamine and α,α'-naphtylenediamine as diamine in step (2) thereof ;
- the use of diethylether as ether in step (3) thereof;
- the use of halide, more preferably bromide as salt of metal M in step (4) thereof.

Step (1) of the process for the preparation of the metallic complexes according to the invention is generally carrried out in an aromatic diluent, preferably toluene, at low temperature, preferably at about 0 to 23°C, for a duration extending from 30 minutes to 5 hours, preferably about 90 minutes.

Step (2) of the process for the preparation of the metallic complexes is generally carrried out in the same diluent as step (1), in the same range of temperatures as step (1), for a duration extending from 5 to 30 hours, preferably about 18 hours. At the end of step (2), the diluent - when used - is preferably removed and the recovered solid product crystallized.

In step (3) of the process for the preparation of the metallic complexes, the ether is generally used in the form of an alkaline solution, by adding an alkaline metal hydroxyde thereto; the reaction is performed in a range of temperatures extending from 50 to 100 °C, preferably at about 65 °C for a duration extending from 5 to 30 hours, preferably 12 hours. The resulting solid thus obtained is preferably separated from the reaction medium and recovered by extraction.

Other details relating to general conditions for operating steps (1) to (3) of the preparation of the metallic complexes according to the invention can be found in the communications made by H. Heydt and M. Regitz in *Houben-Weyl,* 1982, vol. E3, which are incorporated herein by reference.

Finally, step (4) of the process for the preparation of the metallic complexes according to the invention is generally carrried by suspending the bis(iminophosphorane) ligand in an aromatic diluent, preferably tetrahydrofurane, and adding thereto the salt of metal M, the contact being maintained at low temperature, preferably at about 0 to 23°C, for a duration extending from 5 to 30 hours, preferably 12 hours.

In still a further embodiment, the invention relates to a process for the oligomerization of olefins carried out in the presence of the complexes described hereabove.

For carrying out the process for the oligomerization of olefins in accordance with the invention, the olefin to oligomerize, which is generally at least one α-monoolefin containing 2 to 6 carbon atoms, preferably ethylene, is contacted, in oligomerization conditions, as generally defined hereunder, with a catalytic system comprising a metallic complex as defined above and an activating compound (shortly called "activator" hereafter) selected among organoaluminium compounds and ionizing agents. Preferably, the activator is selected among :
(a) the organoaluminic compounds of general formula AlR² ₙY₃₋ₙ wherein R² is an alkyl or aryl group, Y is an halogen atom and 0 < n ≤ 3; preferably R² is a straigth or branched alkyl group containing from 1 to 16 hydrocarbon, more preferably methyl, ethyl or isobutyl; Y is preferably chlorine and n preferably such that 1,5 ≤ n ≤ 2;
(b) the aluminoxanes of general formulae

   R³₂AlO-(AlR³O)ₘ-AlR³₂ and (AlR³O)ₘ₊₂

   wherein m is a number from 1 to 40 and R³ is an alkyl or aryl group containing from 1 to 12 carbon atoms or an hydrogen atom. Preferred compounds (b) are methyl-, ethyl- or isobutylaluminoxanes;
(c) the ionizing agents selected among compounds comprising a first moiety, which features Lewis acid properties and which is capable to ionize the metallic complex and a second moiety, which is inert toward the metallic complex and which is able to stabilize it; examples of such ionizing agents are the triphenylcarbenium tetrakis (pentafluorophenyl) borate; the N,N-dimethylanilinium tetrakis (pentafluorophenyl) borate; the tri-(-n-butyl) ammonium tetrakis (pentafluorophenyl) borate; the tri (pentafluorphenyl) boron; the triphenylboron; the trimethylboron; the tri (trimethylsilyl) borate; and the organoboroxines.

The most preferred activators are the aluminoxanes (b).

According to specific aspects of this embodiment of the invention, the catalytic system defined hereabove is even able to polymerize the olefin which is submitted to the oligomerization process aat least partially into a solid polymeric product. This is especially the case when the metal M of the metallic complex is chromium and when the activator is an aluminoxane (b).

The amount of activator depends on the kind of compound used.
When organoaluminium compounds like those defined under (a) or (b) are used as activators, their amount is generally such that the atomic ratio between the aluminium of the activator and the metal of the metallic complex is comprised between 0.1 and 40 000. Preferably, this ratio is at least 1, more particularly at least 2. This ratio is often at most 10 000 and preferably at most 5 000.

When an ionizing agent is used as activator, the metallic complex is generally present in amounts such that the molar ratio between the metallic complex and the activator is comprized between 0.01 and 100. Preferably, this ratio is at least 0.5, more particularly at least 1. This ratio is often at most 25 and preferably at most 5.

The process for the oligomerization of olefins itself may be carried out under general conditions well known in the art. It may be carried out in accordance with any known operating conditions, for example in solution or in suspension in a hydrocarbon diluent, in suspension in the olefin to oligomerize maintained in the liquid form, or in the gas phase, the latter being preferred.

The oligomerization temperature is generally comprised between - 70 and + 80 °C, preferably between -20 and + 50 °C. The oligomerization pressure is generally comprised between the atmospheric pressure and 80 10⁵ Pa, preferably between 5 10⁵ and 40 10⁵ Pa. The duration of the process is not critical and is generally comprised between 1 minute and 10 hours. Durations higher than 5 minutes, more particularly higher than 10 minutes, are preferred. Preferably, the duration does not exceed 5 hours and more particularly does not exceed 2 hours.

In addition to the foregoing description of the invention, the following examples are provided to illustrate the several aspects of the present invention.

In these examples:
- synthesis products were characterised via NMR spectroscopy with a Brucker AM 400 working at 9.4 Tesla [400 MHz (¹H), 100 MHz (¹³C), 162 MHz (³¹P)];
- oligomers GC analyses were performed using a Perkin-Elmer 8500 gas-chromatograph, equiped with a capillary column (RSL-150, polydimethyl - siloxane, 30 x 0.32 nm, 3µm), with the following temperature programme: initial temperature: 60°C(0 min) - ramp rate 10°C/min - final temperature : 220°C (10 min);
THF means tetrahydrofurane;
TMS means tetramethylsilane.

### Examples 1 to 69

### Part A. Synthesis of the phosphonium salts precursors

### Example 1. Synthesis of N,N'-bis(tricyclopentyl)phosphonium -ortho-phenylenediamine salt (product A.1.)

10.22 g of a 50% wt solution of tricyclopentylphosphine in toluene (21.7 mmol) and 20 ml of toluene were introduced under nitrogen atmosphere in a 100 ml schlênk tube, equipped with magnetical stirring.
After cooling at 0°C, 1.1 ml (21.7 mmol) of bromine were slowly added. At the end of the addition the solution is stirred at room temperature until complete decoloration (1h30). Reaction mixture is cooled again at °C and a solution containing 1.16 g (10.8 mmol) of ortho-phenylenediamine and 2.19 g (21.7 mmol) of triethylamine in 10 ml of THF is added drop-wise. Suspension is stirred overnight at room temperature, then solvent is removed under vacuum. Light brown solid residue is rinsed with small portions of cold water and recrystallised from the minimum amount of chloroform, addition of ethylacetate and cooling overnight at -20°C.

### Yield : 2.66 g (34 %)

### Analyses :

T_{fus} = 213°C (decomposition).
¹H-RMN (CDCl₃ - 300K) δ (ppm) = 8.03 (d, 2H, NH, ³J_{H-P} = 6.4 Hz); 7.27 (m, 2H, CH aromatic); 7.16 (m, 2H, CH aromatic); 3.24 (m, 6H, -C₁H cyclopentyl); 2,13÷1.70 (m, 48H, -CH cyclopentyl) in ppm from TMS.
{¹H}³¹P-RMN (CDCl₃ - 300K) δ (ppm) = 63.23 in ppm from H₃PO₄.

### Example 2. Synthesis of N,N'-bis(triphenyl)phosphonium -ortho-phenylenediamine salt (product A.2.)

The salt has been prepared as described in example 1, but using 10.0 g (38.1 mmol) of triphenylphosphine, 6.09 g (38.1 mmol) of bromine, 1.98 g (18.3 mmol) of *ortho*-phenylenediamine and 3.87 g (38.2 mmol) of triethylamine.
Yield : 7.30 g grey powder (51%)

### Analyses :

T_{fus} = 249°C (decomposition).
¹H-RMN (CDCl₃ - 300K) δ (ppm) = 9.78 (s, broad, 2H, NH); 7.82÷7.60 (m, 30H, CH aromatic PΦ₃); 6.75 (m, 2H, CH aromatic); 6.58 (m, 2H, CH aromatic) in ppm from TMS.
{¹H}³¹P-RMN (CDCl₃ - 300K) δ (ppm) = 35.70 in ppm from H₃PO₄.

### Example 3. Synthesis of N,N'-bis(tricyclohexyl)phosphonium -ortho-phenylenediamine salt (product A.3.)

The salt has been prepared as described in example 1, but using 4.40 g (15.7 mmol) of tricyclohexylphosphine, 2.50 g (15.6 mmol) of bromine, 0.76 g (7.0 mmol) of *ortho*-phenylenediamine and 1.64 g (16.2 mmol) of triethylamine.
Yield : 3.50 g light brown powder (59 %)

### Analyses :

T_{fus} = 227°C (decomposition).
¹H-RMN (CDCl₃ - 300K) δ (ppm) = 7.94 (d, 2H, NH, ³J_{H-P} = 5.5 Hz); 7.16 (s broad, 4H, CH aromatic); 3.17 (m, 6H, -C₁H cyclohexyl); 1.84÷1.34 (m, 30H, -CH cyclohexyl) in ppm from TMS
{¹H} ³¹P-RMN (CDCl₃ - 300K) δ (ppm) = 56.70 in ppm from H₃PO₄.

### Example 4. Synthesis of N,N'-bis(tri-o-tolyl)phosphonium -ortho-phenylenediamine salt (product A.4.)

The salt has been prepared as described in example 1, but using 4.0 g (13.1 mmol) of tri(*o*-tolyl)phosphine, 2.1 g (13.1 mmol) of bromine, 0.66 g (6.11 mmol) of *ortho*-phenylenediamine and 0.99 g (9.8 mmol) of triethylamine. Product A.4. has been used for next synthetic step (see below) without any further characterisation.

### Example 5. Synthesis of N,N'-bis(tri-m-tolyl)phosphonium -ortho-phenylenediamine salt (product A.5.)

The salt has been prepared as described in example 1, but using 3.0 g (9.8 mmol) of tri(*m*-tolyl)phosphine, 1.57 g (9.8 mmol) of bromine, 0.52 g (4.8 mmol) of *ortho*-phenylenediamine and 0.99 g (9.8 mmol) of triethylamine.
Yield : 2.38 g brown powder (57 %)

### Analyses :

¹H-RMN (CDCl₃ - 300K ) δ (ppm) = 7.33 (m, 24H, CH aromatic tolyl); 6.5 (m, 4H, CH aromatic); 2.22 (s, 18H, -CH₃) in ppm from TMS

### Example 6. Synthesis of N,N'-bis(tri-p-tolyl)phosphonium -ortho-phenylenediamine salt (product A.6.)

The salt has been prepared as described in example 1, but using 2.0 g (6.5 mmol) of tri(*p*-tolyl)phosphine, 1.05 g (6.5 mmol) of bromine, 0.34 g (3.1 mmol) of *ortho*-phenylenediamine and 0.66 g (6.5 mmol) of triethylamine.
Yield : 1.50g brown powder (55 %)

### Analyses :

¹H-RMN (CDCl₃ - 300K ) δ (ppm) = 9.7 (d, 2H, NH); 7.9 + 7.4÷7.2 (m, 24H, CH aromatic tolyl); 6.72 (m, 2H, CH aromatic); 6.61 (m, 2H, CH aromatic); 2.4 (s, 18H, -CH₃) in ppm from TMS.

### Example 7. Synthesis of N,N'-bis(tri-p-tolyl)phosphonium -ortho-phenylenediamine salt (product A.7.)

The salt has been prepared as described in example 1, but using 2.48 g (8.15 mmol) of tribenzylphosphine, 1.53 g (9.57 mmol) of bromine, 0.50 g (4.62 mmol) of *ortho*-phenylenediamine and 0.97 g (9.58 mmol) of triethylamine.
Yield : 1.85 g brown powder (52 %)

### Analyses :

¹H-RMN (CDCl₃ - 300K ) δ (ppm) = 7.2÷7.11 (m, 34H, CH aromatic all); 3.06 (s, 2H, CH₂); 3.0 (s, 2H, CH₂) in ppm from TMS.

### Example 8. Synthesis of N,N'-bis(tricyclopentyl)phosphonium -cis,trans-1,2-cyclohexyldiamine salt (product A.8.)

The salt has been prepared as described in example 1, but using 21.05 g (44.1 mmol) of the triscyclopentylphosphine solution, 6.70 g (44.1 mmol) of bromine, 2.48 g (21.7 mmol) of *cis, trans-* 1,2-cyclohexanediamine and 4.58 g (45.3 mmol) of triethylamine.
Yield : 4.35 g white solid (27 %)

### Analyses :

¹H-RMN (CDCl₃ - 300K ) δ (ppm) = 5.93 (s broad, 2H, NH); 3.67 (m, 2H, CH-NH); 2.86 (m, 6H, -C₁H cyclopentyl); 2,14÷1.60 (m, 56H, -CH aliphatic) in ppm from TMS
{¹H}³¹P-RMN (CDCl₃ - 300K) δ (ppm) = 60.95 in ppm from H₃PO₄.

### Example 9. Synthesis of N,N'-bis(tricyclopentyl)phosphonium -4,5-dimethyl-1,2-phenylenediamine salt (product A.9.)

The salt has been prepared as described in example 1, but using 21.05 g (44.1 mmol) of the triscyclopentylphosphine solution, 7.05 g (44.1 mmol) of bromine, 2.95 g (22 mmol) of 4,5-dimethyl-1,2-phenylenediamine and 4.56 g (45 mmol) of triethylamine.
Yield : 9.12 g white solid (54 %)

### Analyses :

¹H-RMN (dmso-d⁶ - 300K ) δ (ppm) =7.0 (d, 2H, CH- aromatic); 3.0 (m, 6H, -C₁H cyclopentyl); 2.16 (s, 6H, -CH₃); 1.89 (m, 24H, -C₂H cyclopentyl); 1.19 (m, 24H, -C₃H cyclopentyl); in ppm from TMS

### Part B. Synthesis of bis(imino)phosphorane ligands

### Example 10. Synthesis of -ortho-phenylenebis(tricyclopentyl)iminophosphorane (ligand B.1.)

2.51 g (3.40 mmol) of product A.1. suspended in 100 ml of dry diethylether are introduced under nitrogen atmosphere in a 250 ml round bottomed flask, equipped with magnetical stirring.
1.10 g (19.60 mmol) of potassium hydroxide pellets and molecular sieves are added. Suspension is stirred overnight at 65°C. Reaction mixture is filtered and solid is extracted with dichloromethane (3 x 15 ml). Filtered solution and organic extracts were collected and dried under vacuum to yield a light brown residue.
Yield: 1.60 g (82 %)

### Analyses :

T_{fus} = 106°C (decomposition).
¹H-RMN (C₆D₆ - 300K ) δ (ppm) = 6.91 (s broad, 4H, CH aromatic); 2.0÷1.40 (m, 54H, -CH cyclopentyl) in ppm from TMS.
{¹H}³¹P-RMN (C₆D₆ - 300K) δ (ppm) = 75.60 in ppm from H₃PO₄.

### Example 11. Synthesis of ortho-phenylenebis(triphenyl)iminophosphorane (ligand B.2.)

The compound has been prepared as described in example 10, but using 6.0 g (7.6 mmol) of product A.2. and 2.47 g (44.0 mmol) of KOH.
Yield : 4.35 g grey powder (91 %)

### Analyses :

T_{fus} = 203°C (decomposition).
¹H-RMN (C₆D₆ - 300K) δ (ppm) = 7.71 (m, 12H, CHₒᵣₜₕₒ aromatic PΦ₃); 7.41 (m, 12H, CHₚₐᵣₐ aromatic PΦ₃); 7.29 (m, 12H, CHₘₑₜₐ aromatic PΦ₃); 6.54 (m, 2H, CH aromatic); 6.34 (m, 2H, CH aromatic) in ppm from TMS.
{¹H}³¹P-RMN (C₆D₆ - 300K ) δ (ppm) = 144.91 in ppm from H₃PO₄.

### Example 12. Synthesis of ortho-phenylenebis(tricyclohexyl)iminophosphorane (ligand B.3.)

The compound has been prepared as described in example 10, but using 3.02 g (3.6 mmol) of product A.3. and 1.73 g (30.8 mmol) of KOH.
Yield : 2.11 g light brown powder (86 %)

### Analyses :

T_{fus} = 118°C (decomposition).
¹H-RMN (C₆D₆ - 300K) δ (ppm) =6.95 (s broad, 2H, CH aromatic); 6.90 (s broad, 2H, CH aromatic); 3.14 (m, 6H, -C₁H cyclohexyl); 1.71÷0.96 (m, 60H, -CH cyclohexyl) in ppm from TMS
{¹H}³¹P-RMN (C₆D₆ - 300K) δ (ppm) = 71.60 in ppm from H₃PO₄.

### Example 13. Synthesis of ortho-phenylenebis[tris(o-tolyl)]iminophosphorane (product B.4.)

The compound has been prepared by slight modification of the procedure described in Example 10, using product A.4. as obtained and 3.0 g (120 mmol) of NaH instead of KOH.
Yield : 0.70 g light brown powder (16 %)

### Example 14. Synthesis of ortho-phenylenebis[tris(m-tolyl)]iminophosphorane (ligand B.5.)

The compound has been prepared as described in Example 10, but using 2.10 g (2.4 mmol) of product A.5. and 0.58 g (24 mmol) of NaH.
Yield : 1.33 g brown powder (78 %)

### Analyses :

¹H-RMN (C₆D₆ - 300K) δ (ppm) = 7.43 (m, 24H, CH aromatic tolyl); 6.29 (m, 2H, CH aromatic); 6.17 (m, 2H, CH aromatic); 2.31 (s, 9H, -CH₃); 2.19 (s, 9H, -CH₃); in ppm from TMS.

### Example 15. Synthesis of ortho-phenylenebis[tris(p-tolyl)]iminophosphorane (ligand B.6.)

The compound has been prepared as described in Example 10, but using 1.30 g (1.5 mmol) of product A.6. and 0.36 g (14.8 mmol) of NaH.
Yield : 0.20 g brown powder (19 %)

### Analyses :

¹H-RMN (CD₂Cl₂ - 300K ) δ (ppm) = 7.58 (m, 24H, CH aromatic tolyl); 7.28 (m, 2H, CH aromatic); 7.16 (m, 2H, CH aromatic); 2.39 (s, 18H, -CH₃) in ppm from TMS
{¹H}³¹P-RMN (CD₂Cl₂ - 300K) δ (ppm) = 28.12 in ppm from H₃PO₄.

### Example 16. Synthesis of ortho-phenylenebis(trisbenzyl)iminophosphorane (ligand B.7.)

The compound has been prepared as described in example 10, but using 3.0 g (3.8 mmol) of product A.7. and 0.93 g (38 mmol) of NaH.
Yield : 1.50 g brown powder (63 %)

### Analyses :

¹H-RMN (CD₂Cl₂ - 300K ) δ (ppm) = 7.24 (m, 34H, CH aromatic all); 3.04 (s, 6H, -CH₂); 2.98 (s, 6H, -CH₂) in ppm from TMS.

### Example 17. Synthesis of ortho phenylenebis(cyclohexyldiphenyl) iminophosphorane (ligand B.8.)

2.5 g (9.32 mmol) of diphenylcyclohexyl phosphine in 10 ml of toluene were introduced in a round bottomed flask. After cooling at 0°C, 1.7 g (11 mmol) of bromine were slowly added. Mixture was stirred for 40 minutes at room temperature and then cooled again at 0°C. 0.48 g (4.44 mmol) of *ortho*-phenylenediamine and 0.94 g (9.29 mmol) of triethylamine in 4 ml of dry THF were added drop-wise. After stirring overnight, solvent was removed under vacuum, solid was rinsed twice with diethylether and several times with pentane (10 x 10 ml). Solid was thus suspended in THF (20 ml) and 2.24 g (93.2 mmol) of NaH were added at room temperature in small portions. Mixture was stirred at 40°C for 1 h. Mixture was filtered and filtered solution was reduced to dryness. Residue was recrystallised from THF/pentane.
Yield : 1.63 g white solid (57 %)

### Analyses :

¹H-RMN (CD₂Cl₂ - 300K) δ (ppm) =7.70 and 7.35 (m, 20H, P□₂); 6.19 (m, 2H, CH aromatic); 6.05 (m, 2H, CH aromatic); 3.56 (m, 2H, -C₁H cyclohexyl); 1.69÷1.13 (m, 20H, cyclohexyl) in ppm from TMS

### Example 18. Synthesis of ortho-phenylenebis[tris(p-chlorophenyl)]imino-phosphorane (ligand B.9.)

3.0 g (8.20 mmol) of tris(p-chlorophenyl)phosphine in 10 ml of dichloromethane were introduced in a round bottomed flask. After cooling at 0°C, 1.3 g (8.20 mmol) of bromine were slowly added. Mixture was stirred for 15 minutes at room temperature and then cooled again at 0°C. 0.44 g (4.10 mmol) of *ortho*-phenylenediamine and 0.996 g (9.84 mmol) of triethylamine in 10 ml of dichloromethane were added drop-wise. After stirring overnight, solvent was removed under vacuum, solid was thus suspended in THF (100 ml) and 5.0 g (89 mmol) of KOH and molecular sieves were added at room temperature. Mixture was stirred at 40°C for 1 h. Mixture was filtered and solid rinsed three times with dichloromethane. Filtered solution and extracted organic phase were collected and reduced to dryness. Residue was recrystallised from THF/pentane.
Yield : 2.28 g brown solid (67 %)

### Analyses :

¹H-RMN (CD₂Cl₂ - 300K) δ (ppm) = 7.67÷7.46 (m, 32H, P(p-Cl□₃); 7.01÷6.27 (m, 4H, CH aromatic) in ppm from TMS.

### Example 19. Synthesis of ortho-phenylenebis[tris(2,4,6-trimethylphenyl)]imino-phosphorane (ligand B.10.)

3.5 g (9.0 mmol) of tris[(2,4,6-trimethyl)phenyl]phosphine in 10 ml of dichloromethane were introduced in a round bottomed flask. After cooling at 0°C, 1.4 g (9.0 mmol) of bromine were slowly added. Mixture was stirred for 15 minutes at room temperature and then cooled again at 0°C. 0.48 g (4.50 mmol) of *ortho*-phenylenediamine and 1.09 g (10.8 mmol) of triethylamine in 15 ml of dichloromethane were added drop-wise. After stirring overnight, solvent was removed under vacuum, solid was thus suspended in THF (100 ml) and 5.55 g (99 mmol) of KOH and molecular sieves were added at room temperature. Mixture was stirred at 40°C for 1 h. Mixture was filtered and solid rinsed three times with dichloromethane. Filtered solution and extracted organic phase were collected and reduced to dryness. Residue was recrystallised from THF/pentane.
Yield : 2.05 g brown solid (52 %)

### Example 20. Synthesis of cis,trans-1,2-cyclohexylbis(triscyclopentyl)imino-phosphorane (ligand B.11.)

The compound has been prepared as previously described, but using 3.78 g (5.0 mmol) of product A.8. and 2.42 g (43.1 mmol) of KOH.
Yield : 2.83 g white solid (96 %)

### Analyses :

¹H-RMN (CDCl₃ - 300K) δ (ppm) = 3.43 (m, 6H, C₁H-P= cyclohexyl); 2.86 (m, 1H, CH-N=); 2.52 (m, 1H, CH-N=); 1.88÷1.45 (m, 56H, -CH aliphatic) in ppm from TMS
{¹H}³¹P-RMN (CDCl₃ - 300K ) δ (ppm) = 76.59 in ppm from H₃PO₄.

### Example 20. Synthesis of 3,4-dimethyl-1,2-phenylenebis(triscyclopentyl)imino-phosphorane (ligand B.12.)

The compound has been prepared as previously described, but using 3.0 g (3.8 mmol) of product A.9. and 0.93 g (38 mmol) of NaH.
Yield : 1.50 g white solid (63 %)

### Analyses :

¹H-RMN (CD₂Cl₂ - 300K ) δ (ppm) =6.31 (d, 2H, CH- aromatic); 2.31 (m, 6H, -C₁H cyclopentyl); 2.02 (s, 6H, -CH₃); 1.87 (m, 24H, -C₂H cyclopentyl); 1.66 (m, 24H, -C₃H cyclopentyl) in ppm from TMS
{¹H}³¹P-RMN (CDCl₃ - 300K) δ (ppm) = 27.09 in ppm from H₃PO₄.

### Example 21. Synthesis of trans-1,2-cyclohexylbis(triscyclopentyl)imino-phosphorane (ligand B.13.)

5.0 g of a 50% wt solution of triscyclopentylphosphine in toluene (10 mmol) and 10 ml of dichloromethane were introduced under nitrogen atmosphere in a schlenk tube equiped with a magnetical stirrer. After cooling at 0°C, 1.68 g (10 mmol) of bromine were slowly added. At the end of the addition the solution is kept half an hour at 0°C then the mixture was stirred for 30 minutes at room temperature and then cooled again at 0°C. 0.58 g (5.14 mmol) of *trans-1,2-cyclohexyldiamine* and 1.27 g (12 mmol) of triethylamine in 15 ml of dichloromethane were added drop-wise. After stirring overnight, solvent was removed under vacuum, solid was washed three times with diethylether and then several times with pentane, dried and thus suspended in THF (100 ml) and 5.9 g (105 mmol) of KOH and molecular sieves were added at room temperature. Mixture was stirred at room temperature for one night. Mixture was filtered and solid rinsed three times with dichloromethane. Filtered solution and extracted organic phase were collected and reduced to dryness. Residue was recrystallised from THF/pentane.
Yield : 2.68 g light brown solid (89 %)

### Analyses :

¹H-RMN (CDCl₃ - 300K) δ (ppm) =2.76 (m, 1H,*CH*-NH); 2.51 (m, 2H, CH₂-CH-NH); 1.97 (m, 3H, *CH* cyclopentyl) ; 1.69 (s, 24H, *CH*_{*2*} cyclopentyl) ; 1,26 (m, 2H, CH₂ cyclohexyl) in ppm from TMS

### Example 22. Synthesis of 2-methylene-1-phenylbis(triscyclopentyl)imino-phosphorane (ligand B.14.)

5.0 g of a 50% wt solution of triscyclopentylphosphine in toluene (10 mmol) and 10 ml of dichloromethane were introduced under nitrogen atmosphere in a schlenk tube equiped with a magnetical stirrer. After cooling at 0°C, 1.68 g (10 mmol) of bromine were slowly added. At the end of the addition the solution is kept half an hour at 0°C then the mixture was stirred for 30 minutes at room temperature and then cooled again at 0°C. 0.61 g (50.3 mmol) of *2-aminobenzylamine* and 1.27 g (12.5 mmol) of triethylamine in 15 ml of dichloromethane were added drop-wise. After stirring overnight, solvent was removed under vacuum, solid was washed three times with diethylether and then several times with pentane, dried and thus suspended in THF (100 ml) and 5.9 g (105 mmol) of KOH and molecular sieves were added at room temperature. Mixture was stirred at room temperature for one night. Mixture was filtered and solid rinsed three times with dichloromethane. Filtered solution and extracted organic phase were collected and reduced to dryness. Residue was recrystallised from THF/pentane.
Yield: 0.48 g beige solid (15%)

### Analyses:

¹H-RMN (CDCl₃ - 300K ) δ (ppm) = 7.25 ÷ 6.95 (m, H aromatic) ; 6.55 (m, H aromatic) ; 4.19 (m, 2H, CH₂); 2.82 (m, *CH* cyclopentyl) ; 2.48 (m, *CH* cyclopentyl) ; 1,64 (m, CH₂ cyclopentyl) in ppm from TMS

### Example 23. Synthesis of 2-methylene-1-phenylbis(triphenyl)iminophosphorane (ligand B.15.)

The compound has been prepared as previously described (see example 22), but using 2 g (7.62 mmol) of triphenylphosphine, 1.22 g (7.62 mmol) of bromine, 0.46 g (3.81 mmol) of 2-aminobenzylamine, 0.92 g (9.15 mmol) of triethylamine and 4.27 g (76,2 mmol) of potassium hydroxyde.
Yield : 1.05 g yellow solid (43%)

### Analyses :

¹H-RMN (CD₂Cl₂ - 300K) δ (ppm) = 7.65 ÷ 7.47 (m, 34H, CH aromatic) ; 2 (s, 2H, CH₂) in ppm from TMS

### Example 24. Synthesis of 2-methylene-1-phenylbis[tri(m-tolyl)]imino-phosphorane (ligand B.16.)

The compound has been prepared as previously described (see example 22), but using 2 g (6.57 mmol) of tri(m-tolyl)phosphine, 1.05 g (6.57 mmol) of bromine, 0.39 g (3.22 mmol) of 2-aminobenzylamine, 0.798 g (7.88 mmol) of triethylamine and 3.68 g (65.7 mmol) of potassium hydroxyde.

### Analyses :

¹H-RMN (CD₂Cl₂ - 300K ) δ (ppm) = 7.54 ÷ 7.20 (m, 24H, CH aromatic) ; 6.85 (m, 1H, CH benzene); 6.73 (m, 1H, CH benzene) ; 6.52 (m, 1H, CH benzene) ; 6.27 (d, 1H, CH benzene) ; 4.40 (d, 2H, CH₂) in ppm from TMS

### Example 25. Synthesis of 2-methylene-1-phenylbis[tri(p-tolyl)]imino-phosphorane (ligand B.17.)

2.0 g (5.47 mmol) of tris(p-chlorophenyl)phosphine in 10 ml of dichloromethane were introduced under nitrogen atmosphere in a schlenk tube equiped with a magnetical stirrer. After cooling at 0°C, 0.87 g (5.47 mmol) of bromine were slowly added. At the end of the addition the solution is kept half an hour at 0°C then the mixture was stirred for 30 minutes at room temperature and then cooled again at 0°C. 0.32 g (2.62 mmol) of *2-aminobenzylamine* and 0.66 g (6.56 mmol) of triethylamine in 10 ml of dichloromethane were added drop-wise. After stirring overnight, solvent was removed under vacuum, solid was washed three times with diethylether and then several times with pentane, dried and thus suspended in THF (100 ml) and 3.1 g (54.7 mmol) of KOH and molecular sieves were added at room temperature. Mixture was stirred at room temperature for two days. Mixture was filtered and solid rinsed three times with dichloromethane. Filtered solution and extracted organic phase were collected and reduced to dryness. Residue was recrystallised from THF/pentane.
Yield: 1.67 g beige solid (75%)

### Analyses:

¹H-RMN (CD₂Cl₂ - 300K ) δ (ppm) = 7.76 ÷ 7.38 (m, 25H, CH aromatic) ; 6.77 (m, 1H, *CH* aromatic amine); 6.61 (m, 1H, CH aromatic) ; 6.27 (d, 1 H, *CH* aromatic amine) ; 4.63 (d, 2H, *CH*_{*2*} *aromatic* amine) in ppm from TMS

### Example 26. Synthesis of 2-methylene-1-phenylbis[diphenyl(cyclohexyl)]imino-phosphorane (ligand B.18.)

The compound has been prepared as previously described (see example 22), but using 2 g (7.45 mmol) of diphenyl(cyclohexyl)phosphine, 1.19 g (7.45 mmol) of bromine, 0.45 g (3.65 mmol) of 2-aminobenzylamine, 0.905 g (8.94 mmol) of triethylamine and 4.18 g (74.5 mmol) of KOH.
Yield : 2.33 g yellow solid (97%)

### Analysis :

¹H-RMN (CD₂Cl₂ - 300K ) δ (ppm) = 7.80 ÷ 7.48 (m, CH aromatic) ; 7.23 (m, CH aromatic) ; 7.04 (m, CH aromatic) ; 6.76 (m, CH aromatic) ; 6.54 (m, CH aromatic) ; 4.27 (d, 2H, *CH*_{*2*} aromatic amine) 2.45 ÷ 0.86 (m, CH aliphatic) in ppm from TMS

### Example 27. Synthesis of 2-methylene-1-phenylbis(tribenzyl)iminophosphorane (ligand B.19.)

The compound has been prepared as previously described (see example 22), but using 1.5 g (4.92 mmol) of tribenzylphosphine, 0.78 g (4.92 mmol) of bromine, 0.29 g (2.36 mmol) of 2-aminobenzylamine, 0.598 g (5.91 mmol) of triethylamine and 2.76 g (49.2 mmol) of KOH.
Yield : 1.68 g beige solid (97%)

### Analyses :

¹H-RMN (CDCl₃ - 300K ) δ (ppm) = 7.31 ÷ 7.22 (m, 34H, CH aromatic) ; 3.66 (d, 2H, *CH*_{*2*} *aromatic* amine) ; 3.05 (s, 6H, CH₂ benzyl) ; 2.99 (s, 6H, CH₂ benzyl) in ppm from TMS

### Part C. Synthesis of metallic complexes

The general procedure is described in the case the metal of the complex is nickel.

In a Schlenk tube under Ar atmosphere, NiBr₂ was suspended in dry THF and 1 eq. mol. of ligand was added; mixture was stirred overnight at room temperature. Solvent was thus partially removed under vacuum and diethylether was added. Solid was filtered and dried under vacuum.
The following Table C summarise yields and characterisations (where available).

### (Examples 29 C and 42 C are given for comparison purposes)

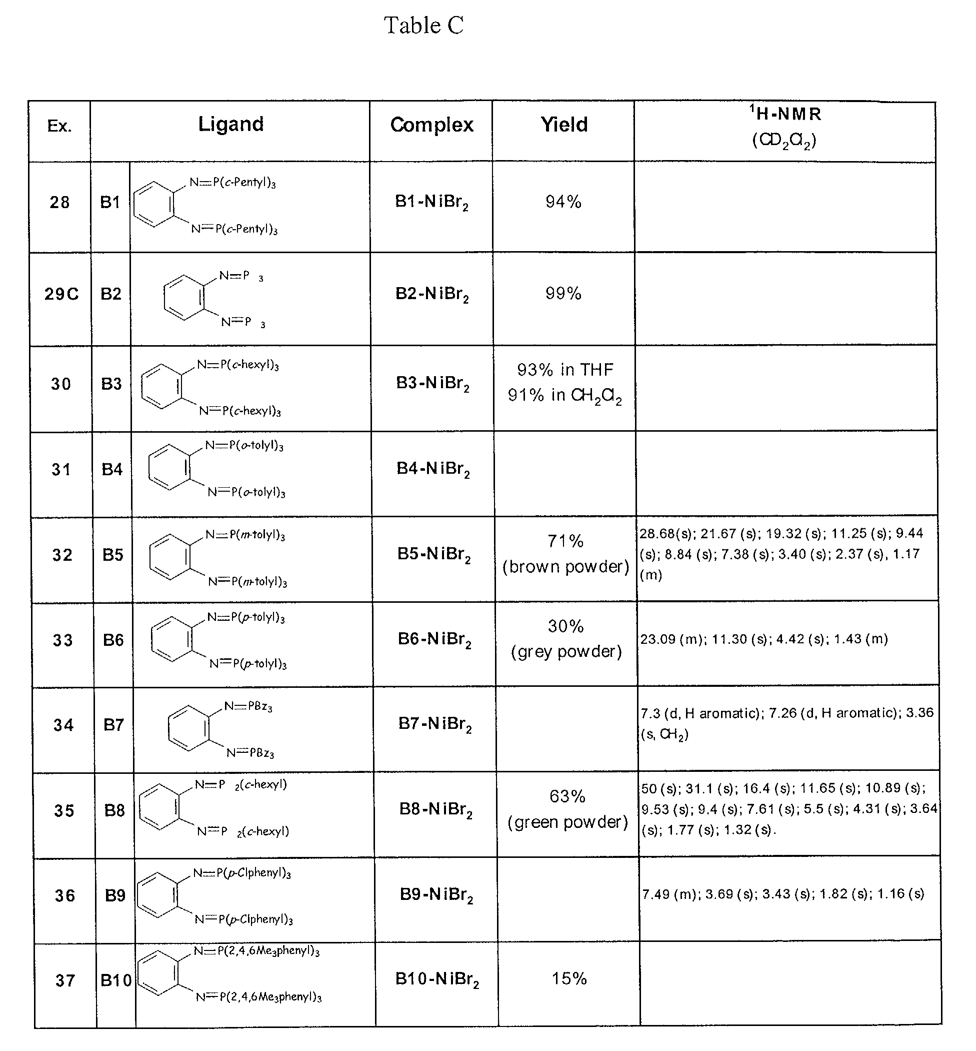

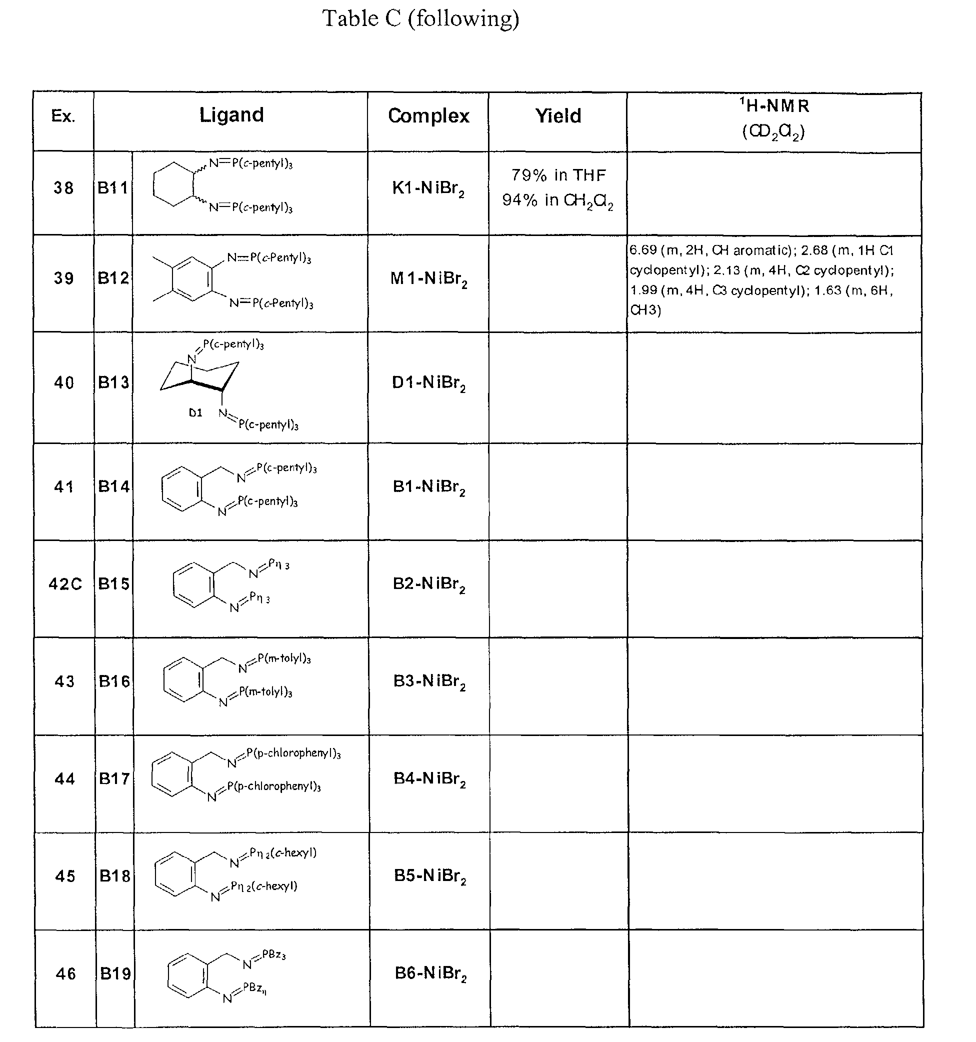

### Part D. Ethylene semi-batch oligomerisation tests

Ethylene polymerisation trials have been carried out in a Büchi Miniclave glass reactor of 100 ml capacity equipped with magnetic stirrer and automatic inner temperature control (max. operating pressure =10 bar at 100°C or 6 bar at 150°C) or in a Tornado 075 stainless steel reactor of 250 ml capacity, equipped with mechanical stirring and inner temperature control.

Reactor is conditioned by several cycles of vacuum/argon, heated at 100°C for 1 hour and cooled down under dry argon flow.
Solvent and catalyst precursor solution are introduced in the autoclave via an injection port. Aluminium alkyle used as activator is then injected to start the run and autoclave is rapidly pressurised with ethylene to the desired pressure. Ethylene is continuously fed to the reactor in order to maintain the desired pressure throughout the reaction.
Reactor is finally cooled down and vented. A small sample of liquid phase is withdrawn and analysed via GC, while resting reaction medium is poured into a large excess of acidified methanol (HF 0.05%) to coagulate PE product.
Polymer is filtered over a Büchner funnel and dried overnight.

Activity level was classified according to the recent practical quantitative ranking of metal catalytic efficiency (according to G.J.P. Britovsek et al., *Angew. Chem. Int. Ed. Engl.,* 38, 428-447 (1999)), with respect to weight of a pre-catalyst, g polymer/(mmol x h), for ethylene polymerisation as follows:

| *Ethylene polymerisation catalysts activity ranking* | |
|---|---|
| level of activity | [g polymer/(mmol x h)] |
| very low | < 1 |
| low | 1-10 |
| moderate | 10-100 |
| high | 100-1000 |
| very high | > 1000 |

Results of the oligomerization tests are summarised in the following tables. Example 54 C, illustrating the use of a metallic complex wherein M is nickel and each R is a phenyl radical, is given for comparative purposes.

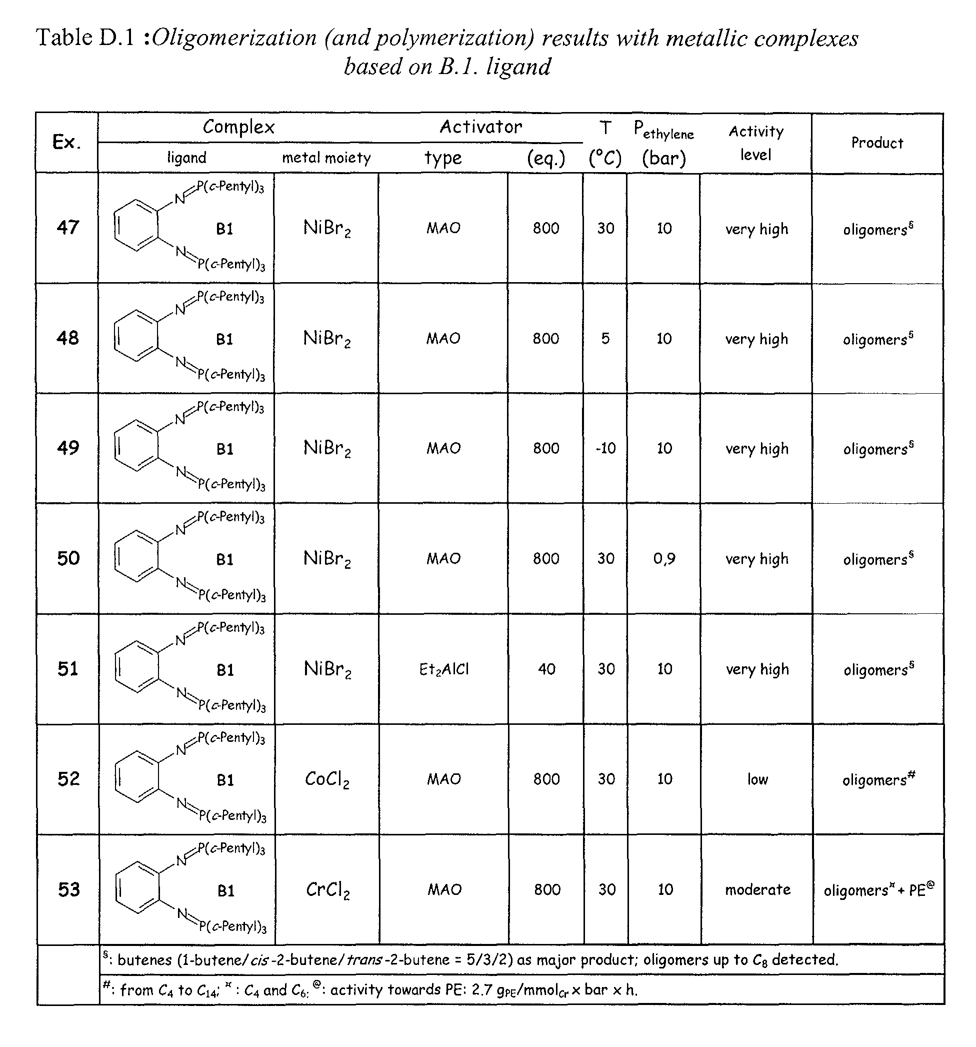

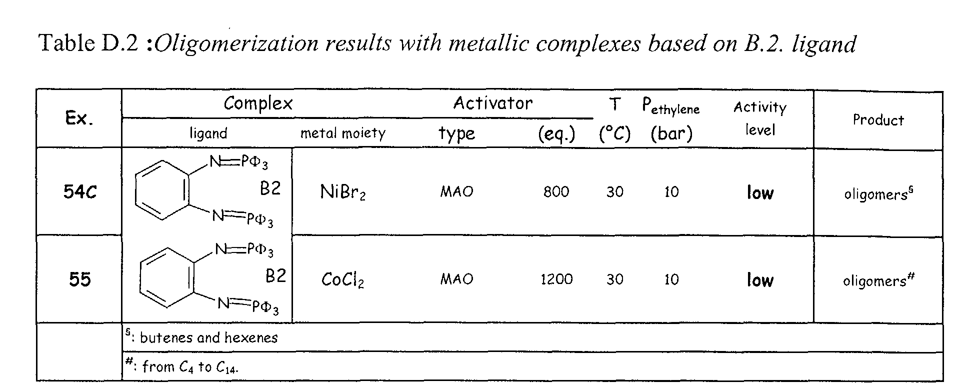

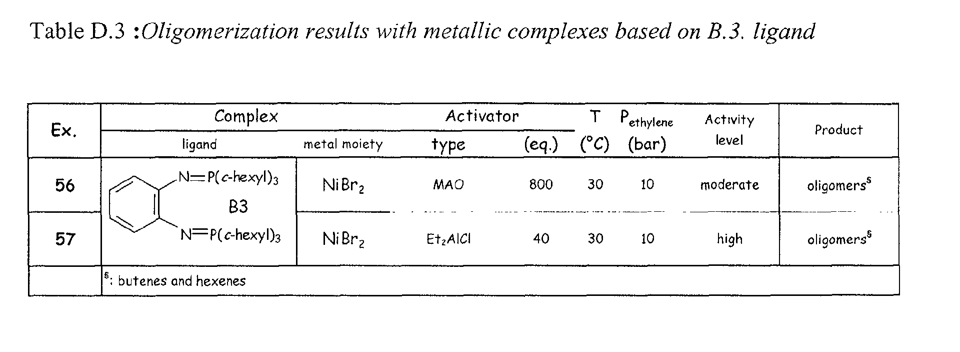

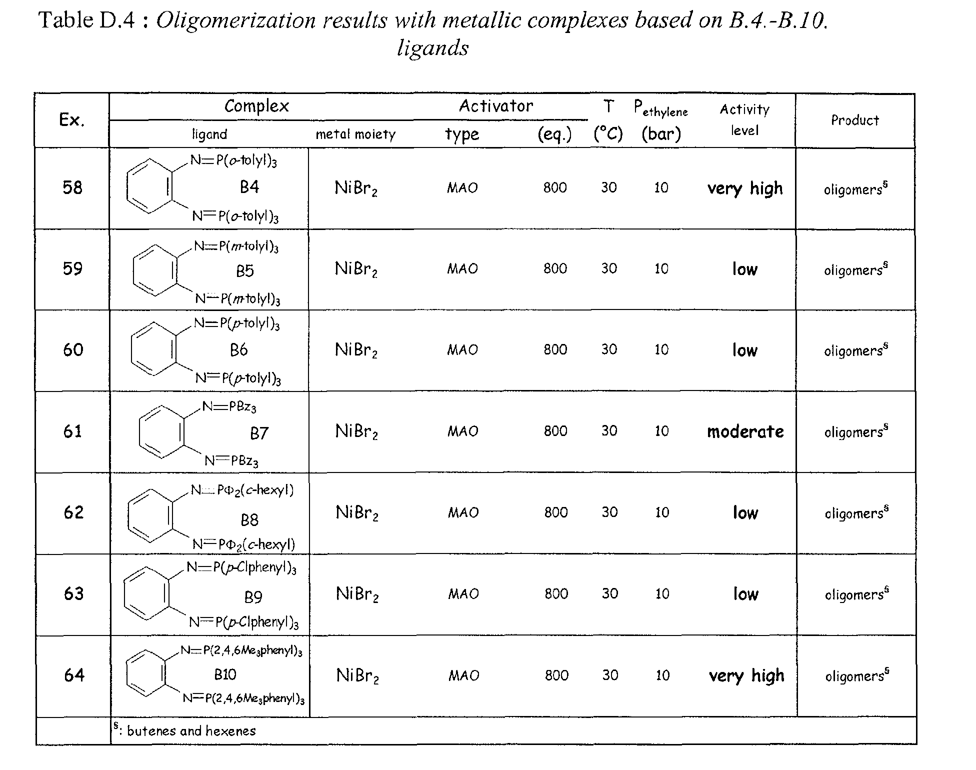

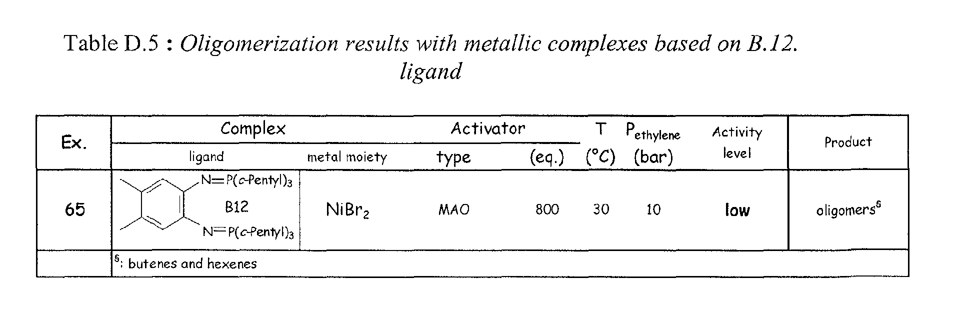

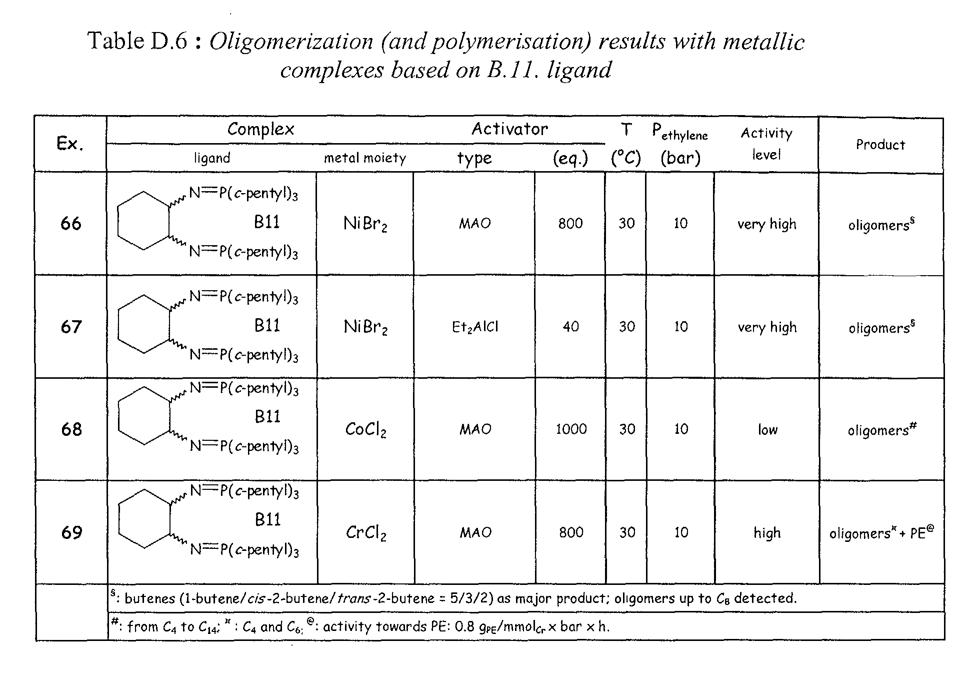

## Claims

1. Metallic complexes represented by the general formula (I): 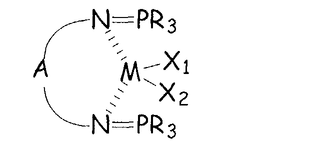 wherein :
A is a covalent hydrocarbon bridging unit;
M is a metal belonging to groups 6 to 10 of the Periodic Table;
each R is a optionally substituted hydrocarbon group optionally containing an heteroatom ;
X₁ and X₂ each independently are an hydrogen atom, a halogen atom, an hydrocarbon group containing from 1 to 35 carbon atoms, an alkoxy group, an amino group, a phosphor-containing hydrocarbon group, a silicon-containing hydrocarbon group containing from 1 to 20 carbon atoms,
with the proviso that, when M is nickel, the hydrocarbon group R is not an unsubstituted phenyl radical..

2. Metallic complexes according to claim 1, wherein A is selected among alkylene radicals, arylalkylene radicals and arylalkylene radicals.

3. Metallic complexes according to claim 1, wherein M is a metal selected from nickel, cobalt and chromium.

4. Metallic complexes according to claim 1, wherein each R is selected among cycloalkyl radicals and aryl radicals optionally substituted by alkyl groups or halogen atoms.

5. Process for the preparation of the metallic complexes according to claim 1 which comprises the following successive steps :
(1) reaction of a phosphine of general formula PR₃, where R has the same meaning as in claim 1, with a halogen in order to obtain a phosphonium halide;
(2) reacting said phosphonium halide with a diamine in order to obtain a bis(aminophosphonium) compound;
(3) reacting said bis(aminophosphonium) compound with a base in order to obtain a bis(iminophosphorane) ligand;
(4) reacting said bis(iminophosphorane) ligand with a salt of the metal M as defined in claim 1.

6. Process for the oligomerization of olefins carried out in the presence of a catalytic system comprising the metallic complex defined in claim 1 and an activating compound selected among organoaluminium compounds and ionizing agents.

7. Process in accordance with claim 6, wherein the activating compound is selected among:
(a) the organoaluminic compounds of general formula AlR²ₙY₃₋ₙ wherein R² is an alkyl or aryl group, Y is an halogen atom and 0 < n ≤ 3; and
(b) the aluminoxanes of general formulae
R³₂AlO-(AlR³O)ₘ-AlR³₂ and (AlR³O)ₘ₊₂
wherein m is a number from 1 to 40 and R³ is an alkyl or aryl group containing from 1 to 12 carbon atoms or an hydrogen atom.
